# EUROPEAN PATENT APPLICATION

(11) **EP 2 471 590 A1**
(43) Date of publication of application: **04.07.2012**
(21) Application number: 10811776.3
(22) Date of filing: 20.08.2010
(51) Int. Cl.: B01D 65/06, B01D 65/02, C02F 1/44

(54) **METHOD FOR CLEANING IMMERSION MEMBRANE APPARATUS AND IMMERSION MEMBRANE APPARATUS**

(30) Priority: 25.08.2009 JP 2009194337
(71) Applicant: Asahi Kasei Chemicals Corporation, Tokyo 101-8101 (JP)
(72) Inventor: HASHIMOTO Tomotaka, Tokyo 101-8101 (JP); SUZUMURA Keitaro, Tokyo 101-8101 (JP)
(74) Representative: Strehl Schübel-Hopf & Partner
(86) International application number: PCT/JP2010/064095
(87) International publication number: WO 2011/024726

(57) **Abstract**

During inline cleaning when filtering operation is suspended, a venting step is carried out in which the piping interior of a header piping system 3 is vented above the water surface FW, and the venting step is followed by a pressurized cleaning step wherein chemical solution is supplied to the header piping system 3 while removing gas from the piping interior, with continued supply of chemical solution to the header piping system 3 even after the piping interior has been sealed and the gas removal has been suspended, for pressurized cleaning of the membrane units 2. As a result, the supplied chemical solution ML spreads smoothly throughout the piping interior of the header piping system 3 so that it is equally supplied to each membrane unit 2 or hollow fiber membrane module 31.

## Description

### Technical Field

The present invention relates to an immersion membrane apparatus cleaning process and to an immersion membrane apparatus.

### Background Art

Cleaning processes for immersion membrane apparatuses have conventionally been known, which accomplish cleaning of immersion membrane apparatuses incorporating a hollow fiber membrane module comprising a plurality of hollow fiber membranes arranged in raw water, and a header piping system that draws the raw water from the hollow fiber membrane module (see Patent document 1, for example). In such cleaning processes, water is refluxed together with a chemical solution through the header piping system during cleaning, for in-line cleaning of the hollow fiber membrane module.

### Citation List

### Patent Literature

[Patent Literature 1] International Patent Publication No. WO01/08789

### Summary of Invention

### Technical Problem

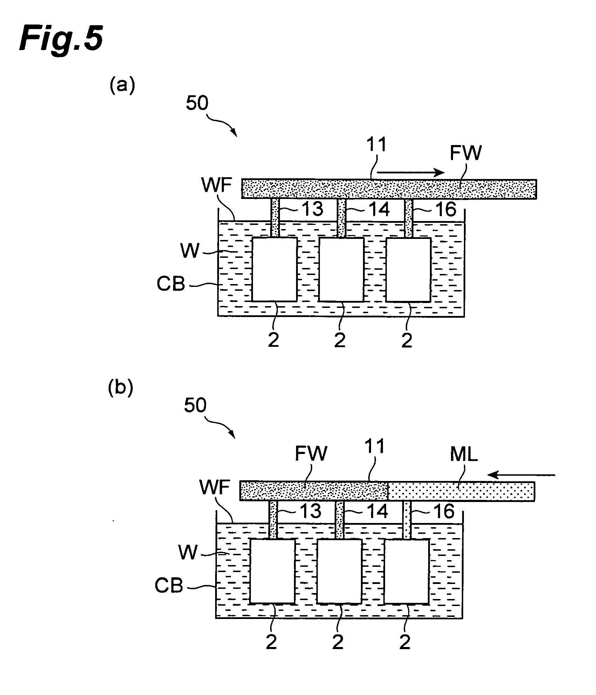

As raw water storage tanks have increased in size in recent years, the separating membrane modules have become unitized, and immersion membrane apparatuses comprising multiple membrane units have come into use. When inline cleaning is performed with such an immersion membrane apparatus according to a conventional method, the chemical solution pressure causes the chemical solution to be more easily supplied to the membrane unit connected at the upstream end of the header pipe than to the other membrane units, as shown in Fig. 5. This produces an imbalance in the amount of supplied chemical solution, between the membrane units connected at the upstream end of the header pipe and the membrane units connected at the downstream end. Clogging has therefore tended to occur in the separating membrane modules of the membrane units at the downstream end. In addition to imbalance in the amount of chemical solution at each membrane unit, an imbalance is also created in the amount of chemical solution in the separating membrane modules within each membrane unit. It has therefore been desirable to find ways to equalize the amount of chemical solution supplied to each membrane unit or the amount of chemical solution supplied to each separating membrane module during inline cleaning.

The present invention has been accomplished with the goal of solving the problem described above, and it is an object of the invention to provide an immersion membrane apparatus cleaning process and an immersion membrane apparatus that can equalize the amount of chemical solution supplied to each membrane unit or the amount of chemical solution supplied to each separating membrane module during inline cleaning.

### Solution to Problem

The immersion membrane apparatus cleaning process of the invention employs an immersion membrane apparatus comprising separating membrane modules each composed of a plurality of separating membranes placed in raw water and a header piping system that draws the raw water from the separating membranes, the header piping system drawing raw water from the top end and/or the bottom end of the separating membrane modules to filter the raw water, wherein a venting step, in which the piping interior of the header piping system is vented above the surface of the raw water, is carried out when the filtering operation is suspended for inline cleaning, and the venting step is followed by a pressurized cleaning step, in which a chemical solution is supplied to the header piping system while removing the gas in the piping interior and the chemical solution is continually supplied to the header piping system even after the piping interior has been sealed and gas removal has ceased, for pressurized cleaning of the separating membranes.

The immersion membrane apparatus of the invention comprises a separating membrane module composed of a plurality of separating membranes placed in raw water, a header piping system that draws the raw water from the separating membranes, opening means that vents the piping interior of the header piping system before the supply of chemical solution for inline cleaning, and degassing means that removes air in the piping interior of the header piping system when the chemical solution is supplied to the header piping system for inline cleaning, wherein the opening means and degassing means are provided in a section of the header piping system located above the surface of the raw water.

With the immersion membrane apparatus cleaning process and immersion membrane apparatus of the invention, venting of the piping interior of the header piping system above the surface of the raw water during inline cleaning causes the surface of the filtered water that has filled the piping interior of the header piping system by the effects of atmospheric pressure to be lowered to the surface of the raw water. When the chemical solution is supplied to the header piping system in this state, air pushed by the chemical solution exits out of the piping. When air exits out of the piping, the chemical solution that has been supplied spreads smoothly throughout the piping interior of the header piping system, further above the filtered water whose surface has been lowered. When the exiting air is expended, the chemical solution is supplied to each membrane unit or separating membrane module (hollow fiber membrane module or flat membrane module, for example), while the filtered water is pushed downward. Since pressure is applied uniformly to the chemical solution being supplied to each unit or separating membrane module, the chemical solution is equally supplied. Thus, it is possible to apply an equal amount of chemical solution to each membrane unit or separating membrane module during inline cleaning.

Various modes for the header piping system may be imagined, such as branch piping connected in a slanting manner, in a horizontal manner or in a perpendicular manner, with respect to a horizontal header pipe. These forms may be selected depending on the requirements for the site of installation of the immersion membrane apparatus, and according to the invention the effect of the header piping system is minimal in terms of imbalance in the amount of the chemical solution, so that the invention is effective for supplying an equal amount of chemical solution to each membrane unit or separating membrane module, in all such forms.

Also according to the invention, a plurality of separating membranes can be subjected to pressurized cleaning by continuously supplying a chemical solution to the header piping system even after the piping interior has been sealed and removal of gas has been completed, so that cleaning can be accomplished while applying the optimal pressure for the pressure resistance of the separating membrane (for example, a hollow fiber or flat membrane). As a result, it is possible to minimize the effects of excessively high pressure or excessively low pressure on the separating membrane during inline cleaning, and to allow uniform cleaning of the separating membrane.

In the immersion membrane apparatus cleaning process of the invention, the chemical solution preferably fills the piping interior when the piping interior of the header piping system is in a sealed state. By carrying out inline cleaning when the chemical solution fills the piping interior, the operation can be smoothly switched from inline cleaning to the filtration step, thus allowing down-time for inline cleaning in the filtering operation to be minimized.

The degassing means in the immersion membrane apparatus of the invention is preferably an air vent valve that permits flow of gas from the piping interior to the piping exterior of the header piping system, while regulating flow of gas from the piping exterior to the piping interior of the header piping system. Using an air vent valve as the degassing means can remove the air alone without leakage of chemical solution to the piping exterior.

In addition, the air vent valve is preferably able to block liquid from the piping interior to the piping exterior of the header piping system and liquid from the piping exterior to the piping interior of the header piping system. If the air vent valve is able to block movement of liquid between the piping interior and piping exterior of the header piping system it will be possible to prevent leakage of liquid in the piping interior and infiltration of liquid from the piping exterior.

In the immersion membrane apparatus of the invention, preferably a plurality of membrane units composed of a plurality of separating membrane modules are provided, and the header piping system has a first header pipe connected with each of the membrane units, with opening means and degassing means provided on the first header pipe. Such a construction allows chemical solution to be equally supplied to each membrane unit during inline cleaning.

Also, in the immersion membrane apparatus of the invention, preferably a plurality of membrane units composed of a plurality of separating membrane modules are provided, and the header piping system has a first header pipe connected with each of the membrane units, with at least an air vent valve provided in the first header pipe. In a construction allowing chemical solution to be equally supplied to each membrane unit, the air vent valve may be provided in the first header pipe at the highest location of the header piping system to allow reliable removal of air in the piping interior of the header piping system.

Also, preferably a plurality of membrane units composed of a plurality of separating membrane modules are provided in the immersion membrane apparatus of the invention, and the header piping system has second header pipes incorporated into the membrane unit and connected with each of the separating membrane modules, with degassing means provided in the first header pipe and with part of the joint between each second header pipe and the separating membrane module situated on the surface of the raw water. Such a construction allows chemical solution to be equally supplied to each separating membrane module during inline cleaning.

### Advantageous Effects of Invention

According to the invention it is possible to equalize the amount of chemical solution supplied to each membrane unit or the amount of chemical solution supplied to each separating membrane module during inline cleaning. In particular, according to the invention, this is effective in terms of imbalance in the amount of the chemical solution, in that it minimizes the effect on the header piping system configuration and supplies an equal amount of chemical solution to each membrane unit or separating membrane module, for different forms of header piping systems.

### Brief Description of Drawings

Fig. 1 is a general schematic drawing showing the configuration of an immersion membrane apparatus according to a first embodiment of the invention.
Fig. 2 is a cross-sectional view schematically showing an air vent valve.
Fig. 3 is a cross-sectional view of part of the hollow fiber membrane module and under support.
Fig. 4 is a general schematic drawing illustrating the function and effect of an immersion membrane apparatus according to the first embodiment of the invention.
Fig. 5 is a general schematic drawing of a conventional immersion membrane apparatus.
Fig. 6 is a general schematic drawing showing the configuration of an immersion membrane apparatus according to a second embodiment of the invention.
Fig. 7 is a general schematic drawing illustrating the function and effect of an immersion membrane apparatus according to the second embodiment of the invention.
Fig. 8 is a general schematic drawing showing the configuration of an immersion membrane apparatus according to a third embodiment of the invention.
Fig. 9 is a general schematic drawing showing the configuration of an immersion membrane apparatus according to a fourth embodiment of the invention.

### Description of Embodiments

### [First embodiment]

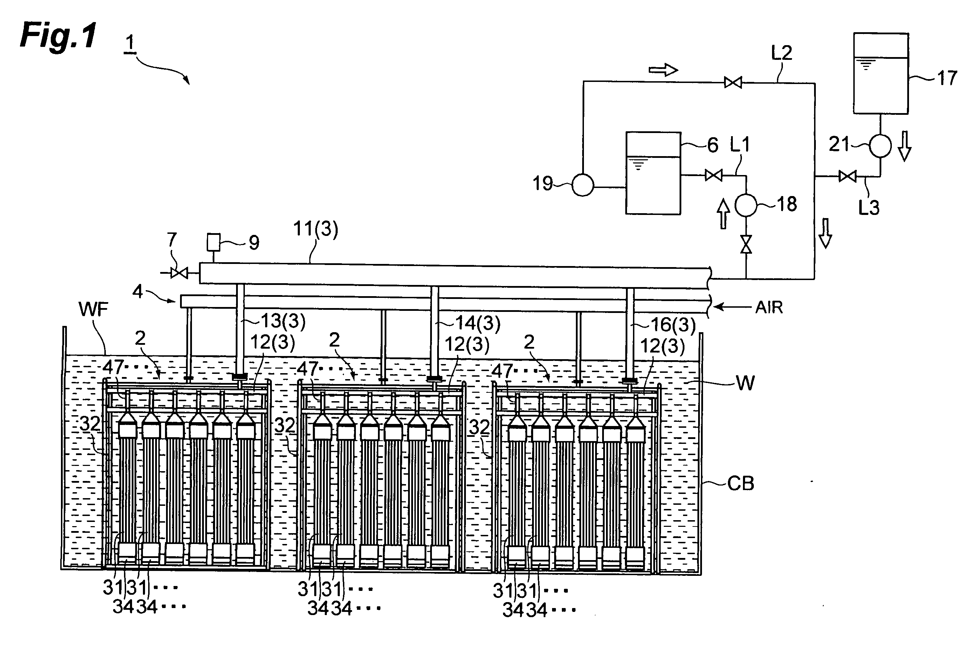

Fig. 1 is a general schematic drawing showing the configuration of an immersion membrane apparatus 1 according to a first embodiment of the invention. As shown in Fig. 1, the immersion membrane apparatus 1 according to the first embodiment comprises a plurality of membrane units 2 situated in the raw water W of a raw water tank CB, a header piping system 3 that draws up the raw water W from the hollow fiber membrane module (separating membrane module) 31 of each membrane unit 2, an air supply piping system 4 that supplies diffusing air to each membrane unit 2, a filtration water tank 6 that stores filtered water that has been drawn up by the header piping system 3, a chemical solution tank 17 that stores the chemical solution used during inline cleaning, an automatic valve (opening means) 7 that vents the piping interior of the header piping system during inline cleaning, and an air vent valve (degassing means) 9 that removes air in the piping interior of the header piping system 3. The air supply piping system 4 is connected to an external air supply apparatus (not shown). In this embodiment, the membrane unit 2 is completely immersed in the raw water W, and the water surface WF is situated at a position higher than the second header pipes 12.

The header piping system 3 comprises a first header pipe 11 connected to each of the membrane units 2, second header pipes 12 incorporated into the respective membrane units 2, and a plurality of connecting tubes 13,14,16 connecting the first header pipe 11 with each of the second header pipes 12. In Fig. 1, the connecting tube 13 is situated at the most downstream end of the first header pipe 11, while the connecting tube 16 is situated at the most upstream end of the first header pipe 11 and the connecting tube 14 is situated between the connecting tube 13 and the connecting tube 16. In the header piping system 3, a pump 18 situated before the filtration water tank 6 is operated to draw up the raw water W in the raw water tank CB through the hollow fiber membrane module of each membrane unit 2.

The filtration water tank 6 is connected with the header piping system 3 by a line L1 in which the pump 18 is located. The filtration water tank 6 is also connected to the header piping system 3 by a line L2, which is separate from the line L1. In the line L2 there is situated a pump 19 that induces backflow of filtered water from the filtration water tank 6 to each membrane unit 2 through the header piping system 3 during inline cleaning.

A chemical solution tank 17 is connected to the line L2 via a line L3. In the line L3 there is situated a pump 21 that induces flow of chemical solution from the chemical solution tank 17 to each membrane unit 2 through the line L2 and header piping system 3 during inline cleaning. The chemical solution stored in the chemical solution tank 17 is approximately 0.1% sodium hypochlorite (NaClO), or sodium hypochlorite with addition of 0.4% caustic soda, for cases where the hollow fiber membrane module is contaminated with organic material. When the hollow fiber membrane module is contaminated with inorganic material, the chemical solution is 0.5%-1% oxalic acid, citric acid, hydrochloric acid, sulfuric acid or the like. These cleaning conditions may be applied when the raw water W is activated sludge.

The automatic valve 7 is a valve capable of automatic opening and closing, and it is provided at the downstream end of the first header pipe 11, above the water surface WF of the raw water W. Opening of the automatic valve 7 vents the piping interior of the header piping system 3. The automatic valve 7 may be opened and closed at a prescribed timing, but for this embodiment it may be opened at the start of inline cleaning, i.e. when the filtering operation is suspended for the start of inline cleaning, and closed before the chemical solution flows in.

An air vent valve 9 is provided at the top end at the downstream end of the first header pipe 11, above the water surface WF of the raw water W. The air vent valve 9 allows passage of air (gas) (permits flow of gas) from the piping interior toward the piping exterior, but blocks air (restricts flow of gas) moving from the piping exterior toward the piping interior. It also blocks liquid (restricts flow of liquid) such as water, including both liquid from the piping interior toward the piping exterior and liquid from the piping exterior toward the piping interior. That is, the air vent valve is defined as a valve that allows air but not water to be removed to the outside, and that does not allow air or water to enter the system.

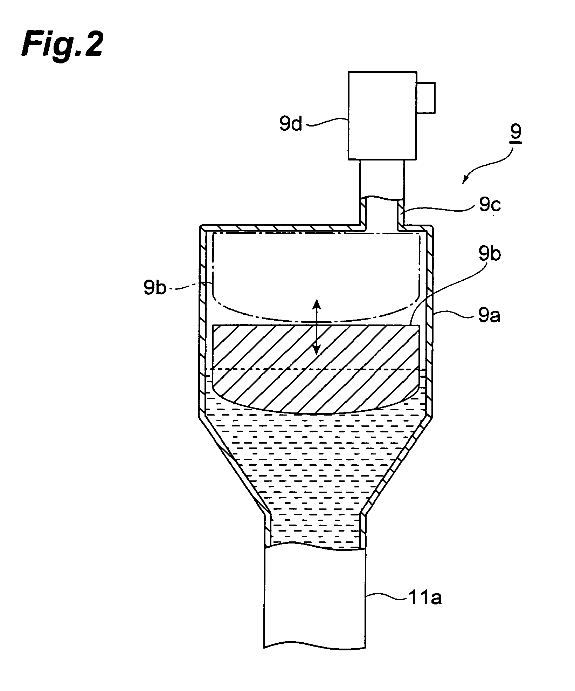

An example of the air vent valve 9 will now be explained with reference to Fig. 2. As shown in Fig. 2, the air vent valve 9 is mounted at the top end of a vertical tube 11a connected to the first header pipe 11. The air vent valve 9 comprises a chamber 9a communicating with the vertical tube 11 a, a float 9b housed within the chamber 9a, a degassing tube 9c provided on the ceiling of the chamber 9a, and a check valve 9d provided in the degassing tube 9c. The air and chemical solution are supplied through the vertical tube 11a to the chamber 9a. When the liquid level of the chemical solution rises the float 9b also rises, and when the float 9b reaches the ceiling of the chamber 9a it blocks the entrance of the degassing tube 9c, causing the air vent valve 9 to close. The header piping system 3 becomes sealed as a result.

Each membrane unit 2 (see Fig. 1) comprises a plurality of hollow fiber membrane modules 31 as a unit, and a plurality are set in the raw water W of the raw water tank CB. Fig. 1 shows only three membrane units 2, but the number is not limited and may be increased according to the size of the raw water tank CB. The number of hollow fiber membrane modules 31 in each membrane unit 2 may also be increased or decreased as appropriate. The membrane unit 2 is constructed so that it comprises a plurality of hollow fiber membrane modules 31, frames 32 forming the enclosures of each of the membrane units 2, second header pipes 12 composing the header piping system 3 and horizontally linked above the frames 32, and under supports 34 supporting the bottom ends of the hollow fiber membrane modules 31 provided at the bottom sections of the frames 32.

Each hollow fiber membrane module 31 is connected to a second header pipe 12 at the upper end while the lower end is supported by an under support 34. The placement spacing between the hollow fiber membrane modules 31 incorporated into the frames 32 is preferably between about 1.2 and 2 times the outer diameter of the hollow fiber membrane modules 31, in consideration of the motion of the hollow fiber membranes 31a in the raw water. For example, the pitch between hollow fiber membrane modules 31 is preferably between about 180 mm and 300 mm. If the hollow fiber membrane modules 31 are too close to each other, the adjacent hollow fiber membranes 31a may impact each other, potentially causing friction between the hollow fiber membranes 31a. In order to minimize the width of movement of the hollow fiber membranes 3 1 a, and due to potential loss of the effect of preventing sludge adhesion, the spacing between the hollow fiber membrane modules 31 is preferably at least 1.2 and preferably at least 1.5 times the outer diameter of the hollow fiber membrane module 31. Although hollow fiber membranes are used as the examples of the separating membranes for this embodiment, flat membranes may be used as the separating membranes and flat membrane modules may be used as the separating membrane modules.

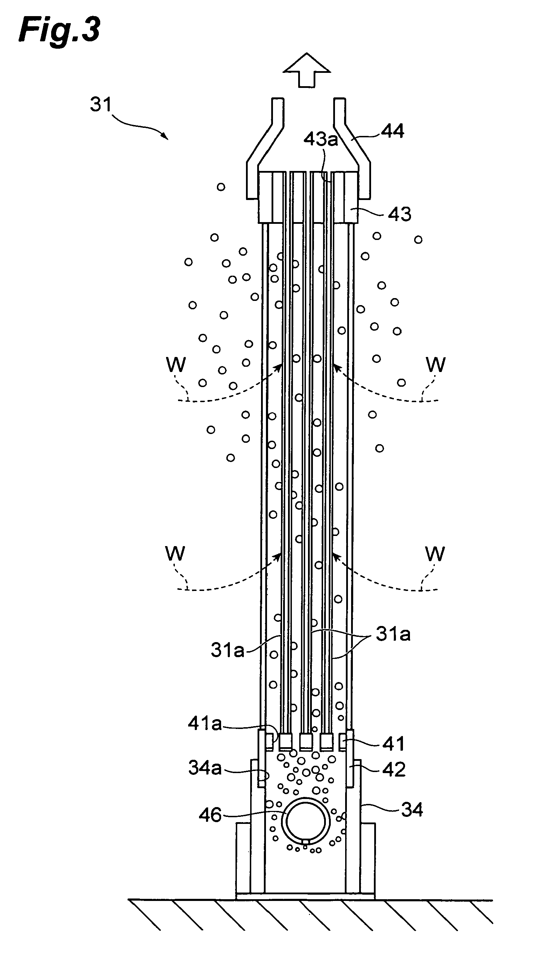

Fig. 3 is a cross-sectional view of part of a hollow fiber membrane module 31 and under support 34. As shown in Fig. 3, the hollow fiber membrane module 31 is constructed so that it comprises a plurality of hollow fiber membranes (separating membranes) 31a, a binding section 41 that binds the hollow fiber membranes 31a at the lower end, a skirt section 42 attached to the binding section 41, a binding section 43 that binds the hollow fiber membranes 31a at the upper end, and a cap member 44 attached at the upper end of the binding section 43.

Each hollow fiber membrane 31a forms a tube shape as a fluid channel for filtered water that is to be filtered inside it, the side walls be formed by the filtration membrane for filtration of raw water W, thus allowing separation of solids by the pores in the membrane surface. The binding section 41 is a discoid member anchored to the lower end of the hollow fiber membrane 31a. The open section at the lower end of the hollow fiber membrane 31a is sealed by the top side of the binding section 41. In the binding section 41 there are formed through-holes 41a at positions other than the position where the hollow fiber membrane 31a is anchored, for passage of aerating air from an aeration tube 46 situated inside the under support 34 that is located below it. The skirt section 42 is a cylindrical member at the top end of which is inserted the binding section 41. The lower end of the skirt section 42 is fitted inside an insertion hole 34a of the under support 34. Thus, the skirt section 42 is able to anchor the hollow fiber membranes 31a and under support 34 so that air does not escape from the aeration tube 46. Air supplied from the air supply piping system 4 moves from top to bottom through the tube provided in the frame 32, thus being supplied to the aeration tube 46 in the under support 34.

The binding section 43 at the upper end of the hollow fiber membrane module 31 has a potting section 43a formed by impregnation of a resin into the bundle of hollow fiber membranes 31a (binding section), and it functions to support the hollow fiber membrane 31a. The cap member 44 is a hollow truncated circular conic member, and the binding section 43 is fitted at its bottom end. A connecting tube protrudes upward from the top part of the cap member 44, and the connecting tube and second header pipe 12 are connected via an expandable expansion joint (joint) 47 (see Fig. 1).

In the immersion membrane apparatus 1 constructed in this manner, as shown in Fig. 1, the pump 18 is operated to draw raw water W in the header piping system 3, so that the raw water W is drawn up after being filtered by the hollow fiber membranes 31a and removed of its sludge. The drawn-up filtered water passes through the second header pipe 12, the connecting tube 13(14,16), the first header pipe 11 and the line L1, and is stored in the filtration water tank 6. Separately, air diffused from the diffusion holes of the aeration tube 46 rises upward (see Fig. 3) and passes through the through-holes 41a of the binding section 41, passing around the periphery of the hollow fiber membranes 31a. During this time, the hollow fiber membranes 31a sway by the action of the diffused air, causing deposits accumulated on the membrane surface to be shaken off Also, upward flow of the air causes stirring and mixing of the mixture in the tank, acting as traction on the membrane surface of the hollow fiber membrane 31a for cleaning of the membrane surface. This is the procedure for the filtering operation (filtration step).

The procedure of the cleaning process for the immersion membrane apparatus 1 by inline cleaning will now be explained. When the filtering operation is suspended for inline cleaning, the automatic valve 7 is initially opened to vent the piping interior of the header piping system 3 above the water surface WF (venting step).

When the venting step causes the liquid level in the piping interior of the header piping system 3 to fall to about the level of the raw water W in the raw water tank CB, the line L2 is opened and the pump 19 is operated. Operation of the pump 19 causes the filtered water in the filtration water tank 6 to be conveyed into the header piping system 3 through the line L2 (see Fig. 1). At the same time the pump 19 is operated, the line L3 is opened and the pump 21 is operated. Operation of the pump 21 causes the chemical solution in the chemical solution tank 17 to be supplied to the line L2 through the line L3, and it is merged with the filtered water for dilution to the prescribed concentration, after which it is conveyed to the header piping system 3. While the chemical solution is supplied to the header piping system 3, the air in the piping interior of the header piping system 3 is removed from the air vent valve 9 above the water surface WF.

When the piping interior becomes full of the chemical solution, the air vent valve 9 is closed to seal the piping interior. Supply of the chemical solution to the header piping system 3 continues even after the piping interior has been sealed, and as a result the chemical solution that has been conveyed into the header piping system 3 is supplied to each hollow fiber membrane module 31 of each membrane unit 2, through the first header pipe 11, the connecting tubes 13(14,16) and the second header pipes 12. This accomplishes pressurized cleaning of the hollow fiber membrane module 31 by the chemical solution (pressurized cleaning step).

The function and effect of the immersion membrane apparatus 1 and the immersion membrane apparatus 1 cleaning process according to this embodiment will now be explained.

A conventional immersion membrane apparatus and immersion membrane apparatus cleaning process will also be described in comparison with this embodiment. Fig. 5 is a general schematic drawing of a conventional immersion membrane apparatus 50, wherein (a) shows the state of the piping interior of the header piping system during filtration, and (b) shows the state of the piping interior of the header piping system during inline cleaning. As shown in Fig. 5, the conventional immersion membrane apparatus 50 has no air vent valve or automatic valve in the header piping system.

In the conventional immersion membrane apparatus 50, filtration is accomplished as shown in Fig. 5(a), so that the first header pipe 11 and the connecting tubes 13,14,16 are filled with the filtered water FW. When filtration has been completed, the effect of atmospheric pressure keeps the filtered water FW filling the first header pipe 11 and connecting tubes 13,14,16. Inline cleaning in this state results in flow of the chemical solution into the connecting tube 16 at the furthest upstream end, among the connecting tubes 13,14,16, due to the relationship of the pressure of the chemical solution, as shown in Fig. 5(b). Flow of the chemical solution into the membrane unit 2 at the furthest upstream end, so that each hollow fiber membrane module is washed, facilitates flow of the chemical solution in the membrane unit 2 at the furthest upstream end compared to the other membrane units 2 which have sludge adhering to the hollow fiber membrane modules. Thus, an imbalance is produced in the amount of chemical solution supplied to the membrane unit 2 connected at the upstream end of the first header pipe 11, and the membrane unit 2 connected at the downstream end. This has tended to cause clogging in the hollow fiber membrane module of the membrane units 2 at the downstream end.

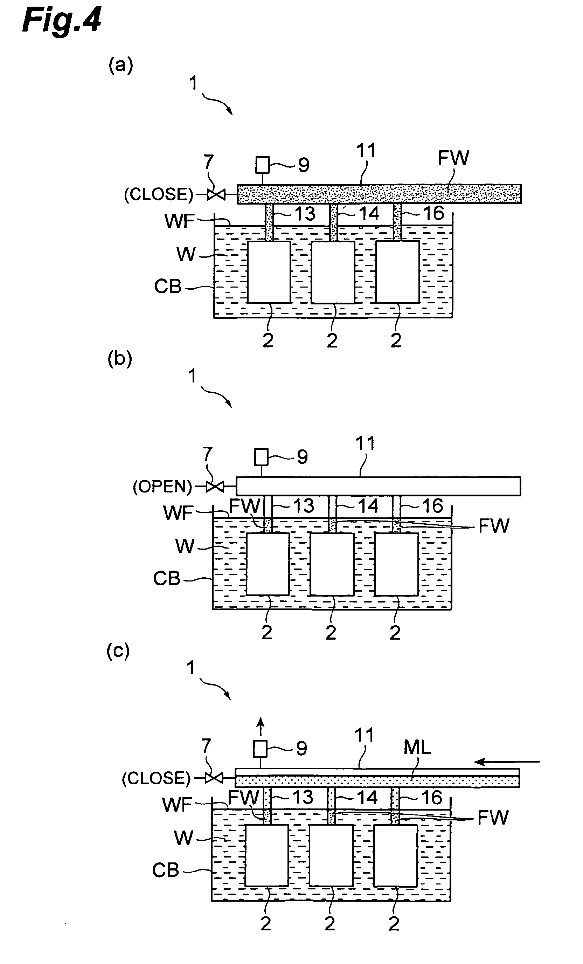

In the immersion membrane apparatus 1 of this embodiment, on the other hand, filtration is accomplished as shown in Fig. 4(a), so that the first header pipe 11 and the connecting tubes 13,14,16 are filled with the filtered water FW. When filtration has been completed, the effect of atmospheric pressure keeps the filtered water FW filling the first header pipe 11 and connecting tubes 13,14,16. As shown in Fig. 4(b), the automatic valve 7 is open during the initial stage of inline cleaning. With the automatic valve 7 in the open state, the piping interiors of the first header pipe 11 and connecting tubes 13,14,16 of the header piping system 3 are vented. This causes the filtered water FW that has filled the first header pipe 11 and the connecting tubes 13,14,16 to flow back into the raw water tank CB. The surface of the filtered water FW in the connecting tubes 13,14,16 thus falls to the height of the water surface WF of the raw water W.

After the height of the surface of the filtered water FW in the connecting tubes 13,14,16 has fallen to the height of the water surface WF of the raw water W, the automatic valve 7 is closed. When chemical solution is supplied in this state, the air pushed out by the chemical solution is removed to the piping exterior through the air vent valve 9, as shown in Fig. 4(c). Removal of the air from the air vent valve 9 allows the chemical solution to smoothly flow into the first header pipe 11 and to flow equally into the connecting tubes 13,14,16. When the first header pipe 11 and connecting tubes 13,14,16 become filled with the chemical solution, and the air being removed from the air vent valve 9 is expended, the chemical solution is supplied to each membrane unit 2 while the filtered water FW is pushed downward in the connecting tubes 13,14,16. Since an equal pressure is applied to the chemical solution in each connecting tube 13,14,16 during this time, the chemical solution becomes equally supplied to each membrane unit 2 without imbalance. Thus, the immersion membrane apparatus 1 and cleaning process of this embodiment allow an equal amount of chemical solution to be supplied to each membrane unit 2 during inline cleaning.

This embodiment represents one form of the header piping system 3, but various modes for the header piping system 3 may be imagined, such as branch piping connected in a slanting manner, in a horizontal manner or in a perpendicular manner, with respect to a horizontal header pipe. These forms may be selected, for example, depending on the requirements for the site of installation of the immersion membrane apparatus 1, and according to the immersion membrane apparatus 1 cleaning process of this embodiment, the effect of the header piping system 3 is minimal in terms of imbalance in the amount of the chemical solution so that this embodiment is effective for supplying an equal amount of chemical solution to each membrane unit 2, in all such forms.

Also according to the immersion membrane apparatus 1 cleaning process of this embodiment, a plurality of hollow fiber membranes 31a can be subjected to pressurized cleaning by continuously supplying a chemical solution to the header piping system 3 even after the piping interior of the header piping system 3 has been sealed and removal of air has been completed, so that cleaning can be accomplished while applying the optimal pressure for the pressure resistance of the hollow fiber membrane 31 a. As a result, it is possible to minimize the effects of excessively high pressure or excessively low pressure on the hollow fiber membrane 31a during inline cleaning, and to allow uniform cleaning of the hollow fiber membrane 31a. When a flat membrane is used instead of the hollow fiber membrane 31a. care must be taken because the pressure resistance is low particularly during backflow inline cleaning, but inline cleaning can be optimized by adjusting the amount of chemical solution supplied.

In the immersion membrane apparatus 1 cleaning process of this embodiment, the chemical solution fills the piping interior when the piping interior of the header piping system 3 has been sealed, and when inline cleaning is carried out in this state, the operation can be smoothly switched from inline cleaning to the filtration step, thus allowing down-time for inline cleaning in the filtering operation to be minimized.

The opening means in the immersion membrane apparatus 1 of this embodiment is the automatic valve 7, and the degassing means is the air vent valve 9. By thus using the automatic valve 7 as the opening means, the header piping interior can be vented by opening with the necessary timing, and it may be closed after the water surface of the filtered water has fallen, thus allowing leakage of the chemical solution supplied into the header piping interior to be prevented. Also, using the air vent valve 9 as the degassing means can remove the air alone without leakage of chemical solution to the piping exterior.

Furthermore, the immersion membrane apparatus 1 of this embodiment comprises a plurality of membrane units 2 composed of a plurality of hollow fiber membrane modules 31, and the header piping system 3 has a first header pipe 11 connected with each of the membrane units 2, with at least an air vent valve 9 provided in the first header pipe 11. In a construction allowing chemical solution to be equally supplied to each membrane unit 2, the air vent valve 9 may be provided in the first header pipe 11 at the highest location of the header piping system 3 to allow reliable removal of air in the piping interior of the header piping system 3.

### [Second embodiment]

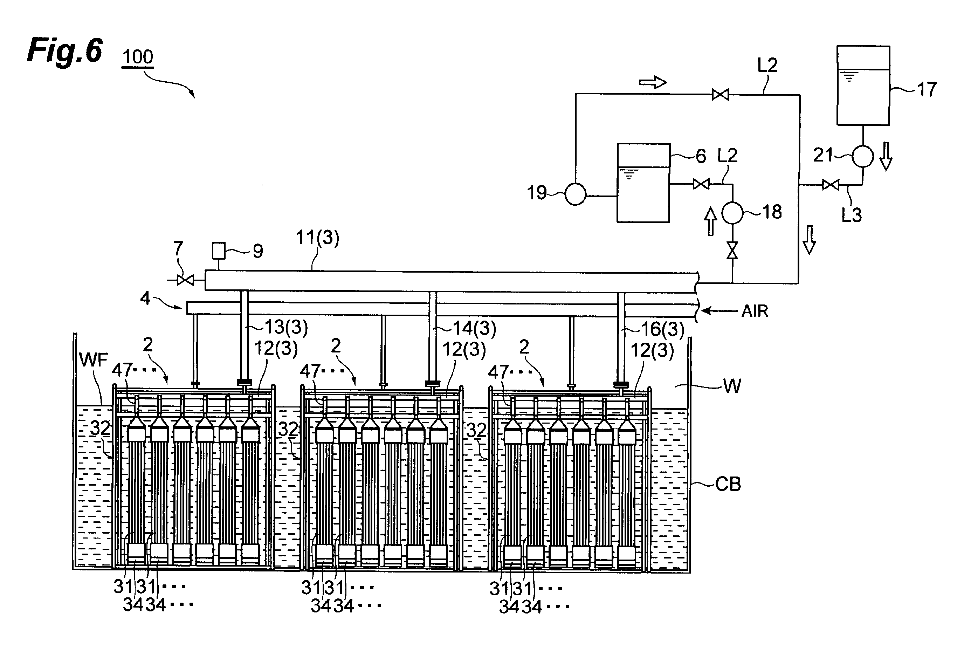

Fig. 6 is a general schematic drawing showing the configuration of an immersion membrane apparatus 100 according to a second embodiment of the invention. The immersion membrane apparatus 100 of the second embodiment differs from the immersion membrane apparatus 1 of the first embodiment primarily in that a section of the expansion joint 47, as a joint connecting the second header pipe 12 and hollow fiber membrane module 31, is situated on the water surface WF of the raw water W. In the explanation that follows, like reference numerals will be used for structural members corresponding to those of the immersion membrane apparatus 1 of the first embodiment, and their explanation will be omitted.

As shown in Fig. 6, the immersion membrane apparatus 100 according to the second embodiment has essentially the same configuration as the immersion membrane apparatus 1 of the first embodiment, and it comprises a plurality of membrane units 2 situated in the raw water W of a raw water tank CB, a header piping system 3 that draws up the raw water W from the hollow fiber membrane module 31 of each membrane unit 2, an air supply piping system 4 that supplies diffusing air to each membrane unit 2, a filtration water tank 6 that stores filtered water that has been drawn up by the header piping system 3, a chemical solution tank 17 that stores the chemical solution used during inline cleaning, an automatic valve (opening means) 7 that vents the piping interior of the header piping system during inline cleaning, and an air vent valve (degassing means) 9 that removes air in the piping interior of the header piping system 3. The air supply piping system 4 is connected to an external air supply apparatus (not shown).

The header piping system 3 comprises a first header pipe 11, second header pipes 12 and connecting tubes 13,14,16. In this embodiment, the hollow fiber membrane modules 31 of each membrane unit 2 are completely immersed in the raw water W, and the water surface WF is located between the hollow fiber membrane modules 31 and each second header pipe 12. That is, a part of each expansion joint 47 connecting the hollow fiber membrane module 31 and second header pipe 12 is situated on the water surface WF of the raw water W.

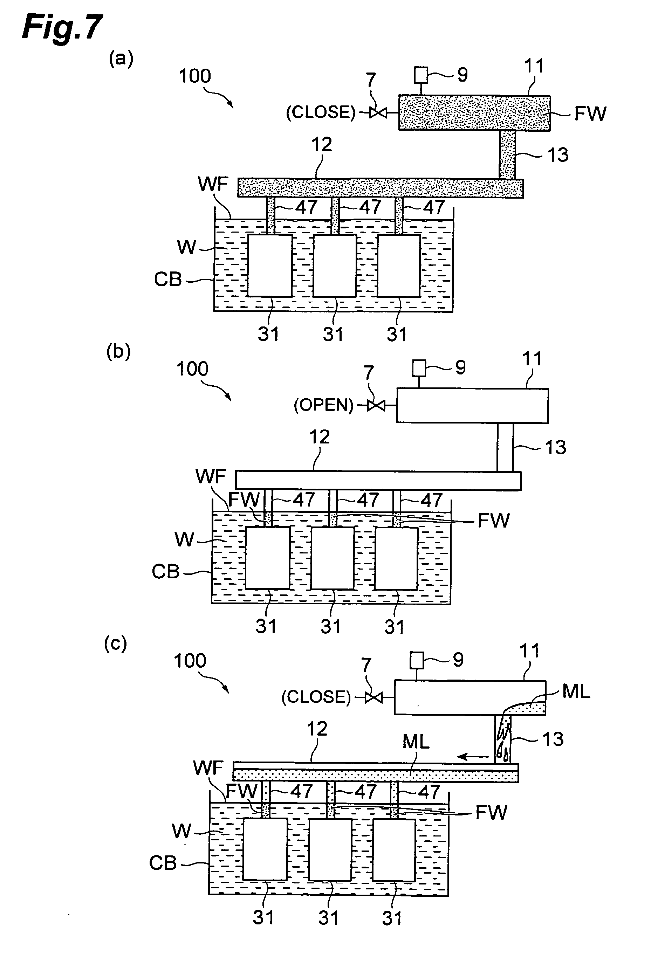

In the immersion membrane apparatus 100 of this embodiment, filtration is accomplished as shown in Fig. 7(a), so that the first header pipe 11, the connecting tubes 13,14,16, the second header pipe 12 and the expansion joint 47 are filled with the filtered water FW. When filtration has been completed, the effect of atmospheric pressure keeps the filtered water FW filling the first header pipe 11, the connecting tubes 13,14,16, the second header pipe 12 and the expansion joint 47. As shown in Fig. 7(b), the automatic valve 7 is open during the initial stage of inline cleaning. With the automatic valve 7 in the open state, the piping interiors of the first header pipe 11, connecting tubes 13,14,16, second header pipe 12 and expansion joint 47 are vented. This causes the filtered water FW that has filled the first header pipe 11, the connecting tubes 13,14,16, the second header pipe 12 and the expansion joint 47 to flow back into the raw water tank CB. The surface of the filtered water FW in the connecting tube of each expansion joint 47 thus falls to the height of the water surface WF of the raw water W.

After the height of the surface of the filtered water FW in the expansion joint 47 has fallen to the height of the water surface WF of the raw water W, the automatic valve 7 is closed. When chemical solution is supplied in this state, the air pushed out by the chemical solution is removed to the piping exterior through the air vent valve 9, as shown in Fig. 7(c). Removal of the air from the air vent valve 9 allows the chemical solution to smoothly flow into the first header pipe 11, connecting tube 13,14,16 and second header pipe 12, and to flow equally into the expansion joint 47. When the first header pipe 11, connecting tube 13,14,16, second header pipe 12 and expansion joint 47 become filled with the chemical solution and air being removed from the air vent valve 9 has been expended, the chemical solution is supplied to each hollow fiber membrane module 31 while the filtered water FW is pushed downward in the expansion joint 47. Since an equal pressure is applied to the chemical solution in each hollow fiber membrane module 31 during this time, the chemical solution becomes equally supplied to each hollow fiber membrane module 31 without imbalance. Thus, the immersion membrane apparatus 100 and cleaning process of this embodiment allow an equal amount of chemical solution to be supplied to each hollow fiber membrane module during inline cleaning.

According to the immersion membrane apparatus 100 cleaning process of this embodiment, the effect of the header piping system 3 is minimal in terms of imbalance in the amount of the chemical solution, so that this embodiment is effective for supplying an equal amount of chemical solution to each membrane unit 2, in all such forms. It is also possible to minimize the effects of excessively high pressure or excessively low pressure on the hollow fiber membrane 31a during inline cleaning, and to allow uniform cleaning of the hollow fiber membrane 31a.

In the immersion membrane apparatus 100 cleaning process of this embodiment, the chemical solution fills the piping interior when the piping interior of the header piping system 3 has been sealed, and when inline cleaning is carried out in this state, the operation can be smoothly switched from inline cleaning to the filtration step, thus allowing down-time for inline cleaning in the filtering operation to be minimized.

### [Third embodiment]

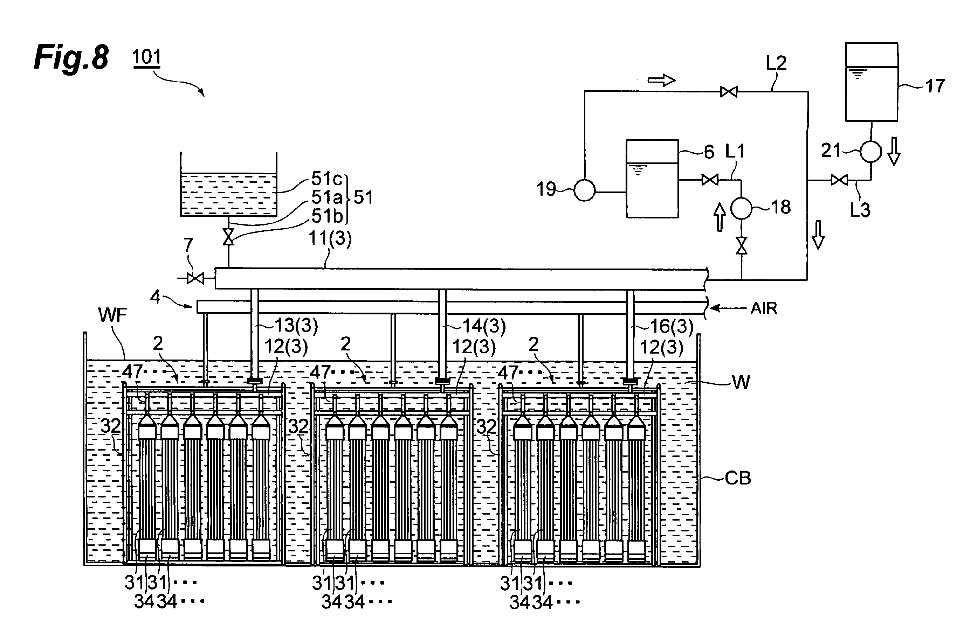

Fig. 8 is a general schematic drawing showing the configuration of an immersion membrane apparatus 101 according to a third embodiment of the invention. The immersion membrane apparatus 101 of the third embodiment differs from the immersion membrane apparatus 1 of the first embodiment in that an air removal unit 51 is provided instead of the air vent valve 9 of the first embodiment. In the explanation that follows, like reference numerals will be used for structural members corresponding to those of the immersion membrane apparatus 1 of the first embodiment, and their explanation will be omitted.

The air removal unit 51 comprises a chemical solution outlet tube 51a communicating with the first header pipe 11, a valve 51 b that opens and closes the chemical solution outlet tube 51a, and a chemical solution storage chamber 51c situated above the first header pipe 11 and connected to the chemical solution outlet tube 51a. The chemical solution storage chamber 51c is vented. The air removal unit 51 corresponds to degassing means.

When inline cleaning is performed in the immersion membrane apparatus 101, the venting step is carried out by the same procedure as for inline cleaning according to the first embodiment. When the chemical solution is supplied to the header piping system 3 after the venting step, the valve 51b is opened to open the chemical solution outlet tube 51a. As a result, the chemical solution filling the piping interior of the header piping system 3 is discharged into the chemical solution storage chamber 51c through the chemical solution outlet tube 51a. When the chemical solution is discharged into the chemical solution storage chamber 51 c, the valve 51b is closed, sealing the piping interior of the header piping system 3, and subsequent continued supply of the chemical solution to the header piping system 3 results in pressurized cleaning of each hollow fiber membrane module (pressurized cleaning step).

The immersion membrane apparatus 101 and cleaning process of this embodiment allow an equal amount of chemical solution to be supplied to each hollow fiber membrane module 31 during inline cleaning. According to the immersion membrane apparatus 101 cleaning process of this embodiment, the effect of the header piping system is minimal in terms of imbalance in the amount of the chemical solution, so that the invention is effective for supplying an equal amount of chemical solution to each membrane unit 2, in all such forms. It is also possible to minimize the effects of excessively high pressure or excessively low pressure on the hollow fiber membrane 31a during inline cleaning, and to allow uniform cleaning of the hollow fiber membrane 31a.

In the immersion membrane apparatus 101 cleaning process of this embodiment, the chemical solution fills the piping interior when the piping interior of the header piping system 3 has been sealed, and when inline cleaning is carried out in this state, the operation can be smoothly switched from inline cleaning to the filtration step, thus allowing down-time for inline cleaning in the filtering operation to be minimized.

### [Fourth embodiment]

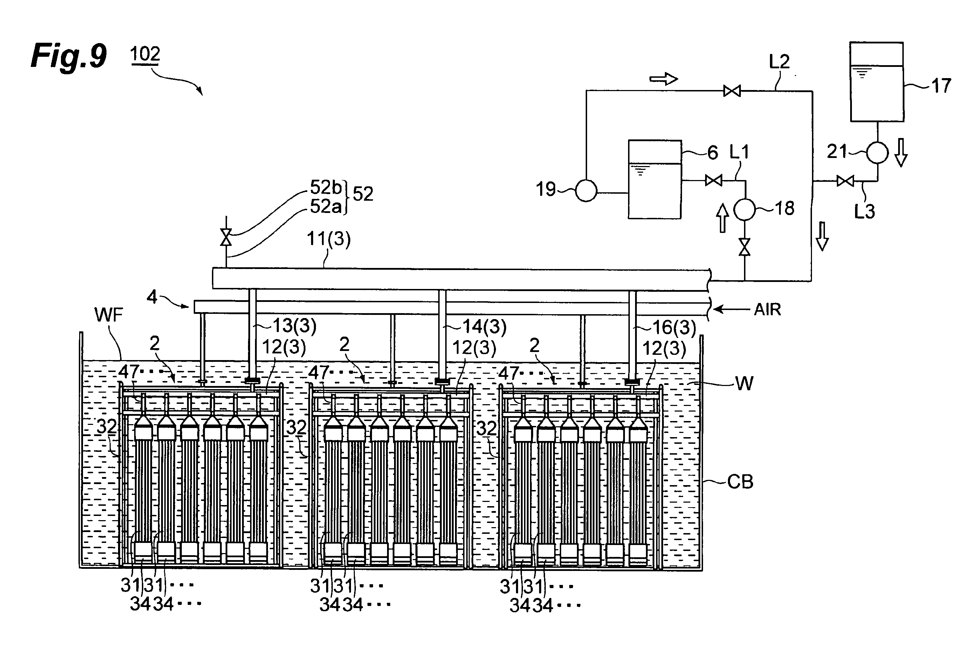

Fig. 9 is a general schematic drawing showing the configuration of an immersion membrane apparatus 102 for the immersion membrane apparatus cleaning process according to a fourth embodiment of the invention. The immersion membrane apparatus 102 comprises a piping seal unit 52 instead of the automatic valve 4 and air vent valve 9 of the immersion membrane apparatus 1. The rest of the structure of the immersion membrane apparatus 102 is essentially the same as the immersion membrane apparatus 1. In the explanation that follows, like reference numerals will be used for structural members corresponding to those of the immersion membrane apparatus 1 of the first embodiment, and their explanation will be omitted.

The piping seal unit 52 is an element providing the functions of both the automatic valve 4 and air vent valve 9, and it comprises an air and chemical solution outlet tube 52a communicating with the first header pipe 11, and a valve 52b that opens and closes the air and chemical solution outlet tube 52a. The piping seal unit 52 corresponds to opening means and degassing means.

When inline cleaning is performed with the immersion membrane apparatus 102, the valve 52b is opened and the piping interior of the header piping system 3 is vented (venting step). After the venting step has caused the liquid level in the piping interior of the header piping system 3 to fall to approximately the level of the raw water W in the raw water tank CB, the chemical solution is supplied to the header piping system 3. During the initial stage of supplying the chemical solution to the header piping system 3, the valve 52b is left open for continuous discharge of air. Next, once the chemical solution has spread throughout the interior of the header piping system 3, the valve 52b is closed to form a sealed state in the piping interior. For this embodiment, the chemical solution does not need to completely fill the piping interior, and an air pocket may be formed at the top of the first header pipe 11. Continued supply of the chemical solution to the header piping system 3, even after the piping interior has been sealed, results in pressurized cleaning of each hollow fiber membrane module (pressurized cleaning step).

Thus, the immersion membrane apparatus 102 and cleaning process of this embodiment allow an equal amount of chemical solution to be supplied to each hollow fiber membrane module 31 during inline cleaning. According to the immersion membrane apparatus 101 cleaning process of this embodiment, the effect of the header piping system is minimal in terms of imbalance in the amount of the chemical solution, so that the invention is effective for supplying an equal amount of chemical solution to each membrane unit 2, in all such forms. It is also possible to minimize the effects of excessively high pressure or excessively low pressure on the hollow fiber membrane 31a during inline cleaning, and to allow uniform cleaning of the hollow fiber membrane 31a.

The embodiments of the invention described above do not limit the invention in any way.

For example, in the embodiment described above an automatic valve 7 is provided in the first header pipe 11 as opening means, but it may be provided in the second header pipe 12 or elsewhere, or it may be provided in any location of the header piping system 3 that is at least above the water surface WF of the raw water W.

Also, an air vent valve 9 is used as the degassing means in the embodiment described above, but any means may be used that allows removal of air in the piping, and an automatic valve may even be used as the degassing means. In this case, the automatic valve functions as both the degassing means and opening means.

Also, the embodiment described above has a construction comprising a plurality of membrane units 2, but it may instead consist of only a single membrane unit 2. Also, a plurality of hollow fiber membrane modules 31 are in a unit, but they do not need to constitute a unit.

Incidentally, the header piping system of the embodiment described above was explained with the assumption that the raw water is drawn from the top end of the separating membrane module, but there is no limitation to the top end, and it may instead be drawn from the bottom end or from both the top and bottom ends.

### [Explanation of Symbols]

1,100: Immersion membrane apparatus, 2: membrane unit, 3: header piping system, 7: automatic valve (opening means), 9: air vent valve (degassing means), 11: first header pipe, 12: second header pipe, 31: hollow fiber membrane module (separating membrane module), 31a: hollow fiber membrane (separating membrane), 47: expansion joint (joint), 51: air removal unit (degassing means), 52: piping seal unit (opening means, degassing means), W: raw water, WF: water surface.

## Claims

1. An immersion membrane apparatus cleaning process employing an immersion membrane apparatus comprising a separating membrane module composed of a plurality of separating membranes placed in raw water and a header piping system that draws the raw water from the separating membranes, the header piping system drawing raw water from the top end and/or the bottom end of the separating membrane module to filter the raw water,
wherein a venting step, in which the piping interior of the header piping system is vented above the surface of the raw water, is carried out when the filtering operation is suspended for inline cleaning, and
the venting step is followed by a pressurized cleaning step, in which a chemical solution is supplied to the header piping system while venting the gas in the piping interior, and the chemical solution is continually supplied to the header piping system even after the piping interior has been sealed and gas venting has ceased, for pressurized cleaning of the separating membranes.

2. The process according to claim 1, when the piping interior is filled with the chemical solution when the piping interior of the header piping system is in a sealed state.

3. An immersion membrane apparatus comprising:
a separating membrane module composed of a plurality of separating membranes placed in raw water,
a header piping system that draws the raw water from the separating membranes,
opening means that vents the piping interior of the header piping system before the supply of chemical solution for inline cleaning, and
degassing means that removes air in the piping interior of the header piping system when the chemical solution is supplied to the header piping system for inline cleaning,
wherein the opening means and degassing means are provided in a section of the header piping system located above the surface of the raw water.

4. An immersion membrane apparatus according to claim 3, wherein the degassing means is an air vent valve that permits flow of gas from the piping interior to the piping exterior of the header piping system, while regulating flow of gas from the piping exterior to the piping interior of the header piping system.

5. An immersion membrane apparatus according to claim 4, wherein the air vent valve is able to block liquid from the piping interior to the piping exterior of the header piping system and liquid from the piping exterior to the piping interior of the header piping system.

6. An immersion membrane apparatus according to any one of claims 3 to 5,
which comprises a plurality of membrane units composed of a plurality of the separating membrane modules,
the header piping system having a first header pipe connected to each of the plurality of membrane units, and
the opening means and degassing means being provided in the first header pipe.

7. An immersion membrane apparatus according to claim 4 or 5,
which comprises a plurality of membrane units composed of a plurality of the separating membrane modules,
the header piping system having a first header pipe connected to each of the plurality of membrane units, and
at least the air vent valve being provided in the first header pipe.

8. An immersion membrane apparatus according to any one of claims 3 to 5,
comprising a plurality of membrane units composed of a plurality of separating membrane modules,
the header piping system having second header pipes incorporated into each membrane unit and connected with each of the separating membrane modules,
the degassing means being provided in the first header pipe, and part of the joint between each second header pipe and the separating membrane module being situated on the surface of the raw water.
